Europäisches Patentamt

**European Patent Office**

Office européen des brevets

(11) Veröffentlichungsnummer: **0 023 044**

**A1**

(12) # EUROPÄISCHE PATENTANMELDUNG

(21) Anmeldenummer: **80104285.4**

(22) Anmeldetag: **21.07.80**

(51) Int. Cl.³: **B 27 B 33/16**
**B 23 D 61/18**

(30) Priorität: **23.07.79 DE 2929836**

(43) Veröffentlichungstag der Anmeldung:
**28.01.81 Patentblatt 81/4**

(84) Benannte Vertragsstaaten:
**BE FR NL**

(71) Anmelder: **Spötzl, Markus**
**Forstenrieder Allee 128b**
**D-8000 München 71(DE)**

(72) Erfinder: **Spötzl, Markus**
**Forstenrieder Allee 128b**
**D-8000 München 71(DE)**

(74) Vertreter: **Lamprecht, Helmut, Dipl.-Ing.**
**Corneliusstrasse 42**
**D-8000 München 5(DE)**

(54) **Schmiegsames, strangförmiges Trennwerkzeug.**

(57) Schmiegsames, strangförmiges Trennwerkzeug, welches an schwer zugänglichen und oder scharf abgewinkelten Stellen mit insbesondere unregelmäßiger Oberflächenform maschinell einsetzbar ist, um z.B. Knochen aus dem Fleisch herauszulösen. Das Werkzeug besteht aus mit Schneid- oder Reißkanten (32) versehenen Körpern, die untereinander durch fadenartige Verbindungsabschnitte (20) verbunden sind.

Fig. 1

Fig. 6

EP 0 023 044 A1

Ing.  Markus  Spötzl

Forstenrieder Allee 128b

8000  München  71

----------------------------------------------------------

Schmiegsames, strangförmiges Trennwerkzeug

----------------------------------------------------------

Die Erfindung betrifft ein schmiegsames, strangförmiges Trennwerkzeug.

Es besteht gelegentlich das Bedürfnis nach einem
Werkzeug, welches geeignet ist, an schwer zugänglichen und/oder relativ scharf abgewinkelten Stellen mit insbesondere unregelmäßiger Oberflächenform maschinell eingesetzt zu werden, beispielsweise um im Bereich der Fleischerei Knochen aus dem Fleisch herauszulösen. Diesem Bedürfnis könnte ein allseitig schmiegsames, strangförmiges Trennwerkzeug gerecht werden.

Es ist bisher aber ein solches allseitig - d.h. nicht nur in einer Ebene - schmiegsames Trennwerkzeug für maschinellen, schweren Einsatz nicht bekannt geworden.

Ein solches Werkzeug muß nicht nur allseitig schmiegsam sein, es muß auch eine ausreichende Lebensdauer und hohe Festigkeit aufweisen.

Es hat sich bei den Versuchen gezeigt, daß für dieses Problem dünner Federstahldraht nicht geeignet ist. Geht man zum Beispiel von einem minimalen Krümmungsradius von 2 mm aus, so ergibt sich unter Berücksichtigung des Elastizitätsmoduls und der Zugfestigkeit ein zulässiger Randfaserabstand von 0,011 mm für den einsetzbaren Federstahldraht. Wenn der Randfaserabstand größer gewählt wird, tritt eine plastische Verformung des Drahts und baldiger Bruch ein. Ein entsprechend feiner Draht ist aber aus Festigkeitsgründen, aber auch weil er sich nicht

- 3 -

schleifen läßt, für den gedachten Anwendungszweck
ungeeignet.

Der Erfindung liegt die Aufgabe zugrunde, ein
schmiegsames, strangförmiges Trennwerkzeug zu
schaffen, das allseitig schmiegsam ist, ausreichende
Festigkeit und Lebensdauer aufweist und unter wirtschaftlichen Bedingungen herstellbar ist.

Die Lösung der gestellten Aufgabe besteht darin,
daß das Werkzeug aus mit Schneid- oder Reißkanten
versehenen Körpern besteht, die untereinander durch
fadenartige Verbindungsabschnitte verbunden sind.

Der Vorteil dieser Lösung besteht vor allem darin,
daß die Körper zur Ausgestaltung von Schneid- oder
Reißkanten ausreichend dimensioniert werden können,
während die fadenartigen Verbindungsabschnitte die
allseitige Schmiegsamkeit des Werkzeugs gewährleisten.
Wenn für die Körper und die Verbindungsabschnitte
unterschiedliche Materialien verwendet werden, können
die Körper aus für die Trennwirkung besonders geeigneten, auch spröden Materialien hergestellt werden
und die fadenförmigen Abschnitte können aus einem
zugleich hochflexiblen und zugfesten Material bestehen, das seinerseits nicht als Trennwerkzeug einsetzbar sein muß. Es kann also sowohl für die mit

- 4 -

Schneid- oder Reißkanten versehenen Körper, wie auch
für die hochflexiblen Verbindungsabschnitte das jeweils besonders geeignete Material eingesetzt werden.

Vorzugsweise sind die schneidenden oder trennenden
Körper prismenartig gestaltet.

Eine weitere zweckmäßige Ausbildung besteht darin,
daß die fadenartigen Abschnitte mit den Körpern
einstückig ausgebildet sind. Dabei besteht eine besonders zweckmäßige Ausgestaltung darin, daß das
Werkzeug aus Kunststoff besteht und die fadenartigen
Abschnitte gereckt sind.

Eine andere zweckmäßige Ausgestaltung ist es, daß die
Körper aus schleifbarem Material bestehen. Damit ergibt sich die Möglichkeit, eine Schneidkante durch
Schleifen herzustellen, falls sie nicht am Körper
angeformt werden kann.

Eine besonders vorteilhafte Ausgestaltung besteht
darin, daß das Werkzeug als fadengespritzte Kette
ausgebildet ist.

Eine weitere vorteilhafte Ausführungsform ist es,
daß ein Faden mit um den Faden geformten, mit diesem fest verbundenen prismatischen Körpern versehen ist, welche aus einem leicht galvanisierbaren Material bestehen und hartverchromt sind.

Diese Ausführungsform hat den Vorteil, daß sich durch Ladungsanhäufung an den Ecken der prismatischen Körper beim Galvanisieren an diesen Ecken anschleifbare Materialanhäufungen ergeben.

Vorzugsweise besteht der Faden aus einem aromatischen Polyamid, während die prismatischen Körper auf den Faden aufgespritzt sind und vorzugsweise aus Acrylbutadienstyrol bestehen.

Nach einer weiteren bevorzugten Ausführungsform sind die prismatischen Körper derart auf dem Faden angeordnet, daß eine Abwinkelung um mindestens $90^{\circ}$ möglich ist.

Nach einer weiteren zweckmäßigen Ausführungsform bestehen die Körper aus keramischem Material.

Vorzugsweise beträgt die Länge der prismatischen Körper nicht mehr als das Doppelte des minimal vorgesehenen Krümmungsradius für das Trennwerkzeug.

- 6 -

Anhand der nun folgenden Beschreibung eines in der Zeichnung dargestellten Ausführungsbeispiels der Erfindung wird diese näher erläutert.

Es zeigt:

Fig. 1    eine stark vergrößerte Seitenansicht eines Teilstücks eines erfindungsgemäßen Schneidwerkzeugs,

Fig. 2    einen Schnitt nach der Linie II-II in Fig. 1,

Fig. 3    eine der Fig. 1 entsprechende Ansicht in etwa natürlicher Größe,

Fig. 4    einen gegenüber Fig. 2 wesentlich vergrößerten Detailschnitt durch die Prismenschneide, wobei die rechte Hälfte (Fig. 4b) den Zustand vor dem Schleifen und die linke Hälfte (Fig. 4a) den Zustand nach dem Schleifen zeigt,

Fig. 5 - 7    eine der Fig. 1 entsprechende Seitenansicht verschiedener Ausführungsformen eines Trennwerkzeugs mit Reißkanten und

Fig. 8    einen Querschnitt dazu.

In der Zeichnung bezeichnet 10 einen Faden aus einem aromatischen Polyamid, z.B. aus einem Material, das unter der Bezeichnung Kevlar als Erzeugnis der Firma DuPont auf dem Markt ist, oder aus Polyester (z.B. TREVIRA der Firma Hoechst AG). Dieser Faden ist in

- 7 -

regelmäßigen Abständen mit prismatischen Körpern 12 von hier dreieckigem Querschnitt umspritzt, die fest mit dem Faden 10 verbunden sind und aus einem leicht galvanisierbaren Kunststoff, z.B. Acrylbutadienstyrol bestehen. Die Oberfläche der Körper 12 ist hartverchromt.

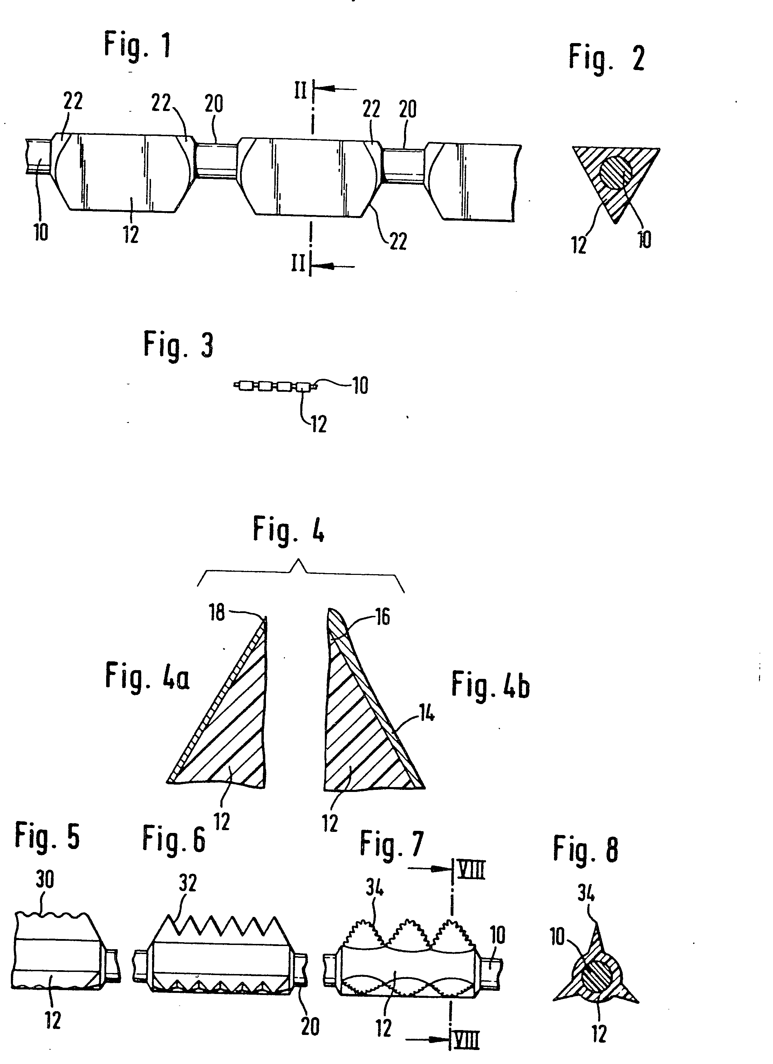

Wie aus der rechten Hälfte der Fig. 4 ersichtlich ist, ist der Körper 12 mit einer dünnen Chromschicht 14 überzogen, die sich im Eckbereich 16 des Körpers allmählich verstärkt. Dadurch wird, wie die linke Hälfte der Fig. 4 deutlich zeigt, die Möglichkeit geboten, in diesem Eckbereich 16 eine angeschliffene Schneide 18 herzustellen.

Wie deutlich aus Fig. 1 ersichtlich ist, sind die Körper 12 mit einem gewissen Abstand auf dem Faden 10 angeordnet, so daß in Verbindungsabschnitten 20 zwischen den einzelnen aufeinanderfolgenden Körpern 12 der Faden 10 seine Schmiegsamkeit voll entfalten kann. Außerdem sind die einander benachbarten Stirnseiten der Körper 12 bei 22 abgeschrägt, so daß das Werkzeug jederzeit um mindestens 90° abgewinkelt werden kann.

Statt die Körper 12 auf den Faden 10 aufzuspritzen, und dadurch fest mit dem Faden 10 zu verbinden, können die Körper 12 und die Verbindungsabschnitte 20 auch in einem Stück aus Kunststoff angefertigt sein, wobei zur Erhöhung der Festigkeit die Verbindungsabschnitte gereckt sind.

Die auf dem Faden 10 befestigten Körper 12 müssen nicht notwendigerweise aus Kunststoff bestehen, sie können z.B. auch aus einem keramischen Sinterwerkstoff bestehen, sofern dieser die Herstellung einer Schneidkante und die feste Verbindung mit dem Faden ermöglicht.

Es ist nicht erforderlich, die Schneide durch Schleifen herzustellen, vielmehr kann bei Verwendung eines geeigneten Werkstoffs eine wirksame Schneide zugleich mit der Formgebung für den Körper 12 an diesem angeformt werden.

Statt einer Schneide können die Körper 12 auch Reißkanten 30, 32 oder 34 besitzen, wie sie beispielsweise aus der Fig. 5 - 8 ersichtlich sind, wobei die trennende Wirkung des Werkzeugs statt durch Schneiden durch Reißen hervorgerufen wird.

- 9 -

Die Körper 12 können gegebenenfalls auch aus Metallstücken bestehen, die fest mit dem Faden verbunden
sind, z.B. aufgeklemmt oder mit dem Faden verklebt
sind.

- 10 -

Patentansprüche:

1. Schmiegsames, strangförmiges Trennwerkzeug, dadurch gekennzeichnet, daß das Werkzeug aus mit Schneid- oder Reißkanten (18,30,32,34) versehenen Körper (12) besteht, die untereinander durch fadenartige Verbindungsabschnitte (20) verbunden sind.

2. Werkzeug nach Anspruch 1, dadurch gekennzeichnet, daß die Körper (12) prismenartig sind.

3. Werkzeug nach einem der vorhergehenden Ansprüche, dadurch gekennzeichnet, daß die fadenartigen Verbindungsabschnitte (20) mit den Körpern (12) einstückig ausgebildet sind.

4. Werkzeug nach Anspruch 3, dadurch gekennzeichnet, daß das Werkzeug aus Kunststoff besteht und die fadenartigen Verbindungsabschnitte (20) gereckt sind.

5. Werkzeug nach einem der vorhergehenden Ansprüche, dadurch gekennzeichnet, daß die Körper (12) aus schleifbarem Material bestehen.

6. Werkzeug nach einem der Ansprüche 3 bis 5, dadurch gekennzeichnet, daß das Werkzeug als fadengespritzte Kette ausgebildet ist.

7. Werkzeug nach einem der Ansprüche 1 oder 2, dadurch gekennzeichnet, daß ein Faden (10) mit um den Faden geformten, mit diesem fest verbundenen prismatischen Körpern (12) versehen ist, welche aus einem leicht galvanisierbaren Material bestehen und hartverchromt sind.

8. Werkzeug nach Anspruch 7, dadurch gekennzeichnet, daß der Faden (10) aus einem aromatischen Polyamid besteht, während die prismatischen Körper (12) auf den Faden aufgespritzt sind und vorzugsweise aus Acrylbutadienstyrol bestehen.

9. Werkzeug nach einem der Ansprüche 1 bis 2 oder 5 bis 8, dadurch gekennzeichnet, daß die Körper (12) aus keramischem Material bestehen.

10. Werkzeug nach einem der vorhergehenden Ansprüche, dadurch gekennzeichnet, daß die Länge der prismatischen Körper (12) nicht mehr als das Doppelte des minimal vorgesehenen Krümmungsradius für das Trennwerkzeug beträgt.

Fig. 1

Fig. 2

Fig. 3

Fig. 4

Fig. 4a

Fig. 4b

Fig. 5   Fig. 6   Fig. 7   Fig. 8

**0023044**

Nummer der Anmeldung

EP 80 10 4285.4

Europäisches
Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 400 205 (G. EISELT) <br> * Seiten 6, 7; Fig. 2, 8 * <br> -- | 1,5,9 |
| | CH - A - 510 505 (D.H.G. PROWSE et al.) <br> * Spalten 5, 6; Fig. 1 bis 4 * <br> -- | 1 |
| A | DE - A1 - 2 613 141 (HOECHST AG) <br> * Ansprüche 1 bis 4; Fig. 1 * <br> ---- | 1 |

**KLASSIFIKATION DER ANMELDUNG (Int.Cl.3)**

B 27 B   33/16

B 23 D   61/18

**RECHERCHIERTE SACHGEBIETE (Int. Cl.3)**

A 22 B    3/00

B 23 D   61/18

B 26 B    9/00

B 26 D    1/00

B 27 B   33/00

B 28 D    1/12

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 15-09-1980 | HOFFMANN |

EPA form 1503.1   06.78